Europäisches Patentamt

**(19)** European Patent Office

Office européen des brevets

**(11)** **EP 0 611 005 B1**

**(12)** **EUROPEAN PATENT SPECIFICATION**

**(45)** Date of publication and mention
of the grant of the patent:
**20.08.1997 Bulletin 1997/34**

**(51)** Int. Cl.[6]: **B60Q 1/44**

**(21)** Application number: **94200315.3**

**(22)** Date of filing: **05.02.1994**

**(54)** **Supplementary tail-light system for automobiles**

Zusätzliches Rücklichtsystem für Autos

Système de feu arrière supplémentaire pour automobiles

**(84)** Designated Contracting States:
**AT BE CH DE DK FR GB GR IE IT LI LU MC NL PT SE**

**(30)** Priority: **09.02.1993 ES 9300252**

**(43)** Date of publication of application:
**17.08.1994 Bulletin 1994/33**

**(73)** Proprietor:
**INSTITUTO DE INVESTIGACION SOBRE REPAR ACION DE VEHICULOS, S.A.
50590 Pedrola (Zaragoza) (ES)**

**(72)** Inventors:
- **Luna Candela Pedro
  E-Barcelona (ES)**
- **Cabeza Dronda Guillermo
  E-Zaragoza (ES)**

**(74)** Representative: **Ungria Lopez, Javier et al
Avda. Ramon y Cajal, 78
28043 Madrid (ES)**

**(56)** References cited:
| | |
|---|---|
| WO-A-92/19468 | DE-A- 2 000 892 |
| DE-A- 3 430 173 | DE-A- 3 440 120 |
| DE-A- 3 620 599 | GB-A- 2 245 351 |
| US-A- 3 109 158 | US-A- 4 667 177 |
| US-A- 4 916 431 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

## FIELD OF THE INVENTION

The present invention relates to a supplementary tail-light system for automobiles having a rear window and two conventional rear brake lights activated by a stepped-down brake pedal for providing warning information to other drivers when a vehicle is slowing down.

## BACKGROUND OF THE INVENTION

All moving vehicles have kinetic energy in terms of the operating conditions at each moment, in other words, of the speed and mass of the vehicle, though the former has a greater influence than the latter. The kinetic energy is proportional to the mass of the vehicle and to the square of the speed thereof.

In the case of the vehicle stopping or braking suddenly, the brake system of the automobile will absorb all the kinetic energy of the moving vehicle until it comes to a full stop, going a so-called stopping distance.

Road traffic conditions require each drive to keep a minimum distance between vehicles while they are moving, so that, in the event of braking, the vehicle can stop without the danger of causing a collision (rear collision.) This minimum distance between vehicles is called the safety distance.

The theoretical safety distance between vehicles depends on the traffic conditions (intensity of traffic), speed of the vehicles, visibility and road conditions.

A predominating factor of the safety distance between vehicles is the distance travelled during the driver's reaction in the following stages:

1) optical perception
2) assimilation of what has happened
3) decision
4) control of the vehicle

In this process, from the driver's reaction until the vehicle comes to a full stop (emergency situation) factors of vital importance such as the following have an influence:

1) the driver's perception
2) the driver's visibility
3) technical improvements of the vehicle (ABS, suspension, etc.)

The driver's total reaction time is that which elapses between the moment when he perceives the need to brake and the moment when he begins to step down on the brake pedal.

As an average of the careful driver's reaction time, around 0.6 seconds can be accepted, however, this dead time frequently reaches 0.75 seconds when the driver's attention is not full, and even longer periods of time depending on the driver's state and conditions.

In short, there is a series of variables and circumstances that vary the distance travelled by the vehicle before it comes to a stop, causing in many cases irremediable rear collisions.

In rear collisions, the automobile that causes the impact, transmits its kinetic energy to the vehicle in front of it and the effects can be fatal for the occupants, depending on the speed and mass of both vehicles. This effect, called whiplash and in the event that it is not fatal, can cause partial paralysis and chronic pain of the people concerned.

Previous analysis of the system is posed from the aspects cited above in the introduction, with a predominating common objective: preventing rear collisions of vehicles.

The influential points are:

1) Safety distance between vehicles:

The distance between vehicles is always determined by the driver himself, in accordance with the traffic conditions existing at all times, in general, conditioned by:

*    Intensity of the traffic, with an increasing number of vehicles worldwide, due to a large degree to inevitable concentration in cities.
*    Speed of vehicles in a traffic jam.
*    Gradual development of road structures towards one-way roads: throughways, expressways, one-way city avenues.

\* Technical improvements of present vehicles, such as for example ABS systems in emergency braking and under circumstances that reduce braking distance and ensure manoeuvrability at all times; increasing introduction of new electronic systems, such as electronic brains to complete the driver's preventive information instantly for making a decision in cases of emergency.

2) Driver's reaction times:

The total reaction time: perception-reaction-change brake, is always determined by the driver, in general, in accordance with the following basic aspects:

The driver's visual perception conditioned by the driver's visual acuity (eyes) and the functional visibility (dead areas) of each vehicle.

Other factors such as: experience, age, internal concentration (stress, radio, comfort, etc.) and external concentration (billboards, etc.), physical state (fatigue), etc.

In short, the combination of these critical influential points on accidents can even increase even more the rise in the number of rear collisions.

According to the above approaches, the safety distance between vehicles and the drivers' reaction time are subjective factors depending on the above cited characteristics; however, the drivers' reaction time is, to a larger or smaller degree, a quantitative delimiting factor in terms of the time element in view of the risk of an accident in rear collisions, from the optical perception until the assimilation of what has happened, in other words:

Minimal time < driver's reaction time < maximum time.

In short, if the driver's total reaction time in view of any emergency situation reduces, it is obvious that the risk of a rear collision will be lower.

WO-A-92/19468 discloses a supplementary tail-light system comprising two independent systems of rear- or tail-lights for indicating braking of the vehicle. The conventional brake-lights are activated when the brake pedal is depressed and the supplemental light/s is/are activated when the vehicle is heavily decelerating.

US-A-4667177 discloses a multicolour system with a supplementary tail-light positioned at the bottom center part of the rear window of the car, said supplementary tail-light being positioned such that the two conventional break lights and said supplementary tail-light constitute the corners of an imaginary triangle. The supplemenatry tail-light comprises lamps of different colours, for example, red, yellow, blue and, optionally, green. Different colours indicate different levels of deceleration, and are successively turned on during increased deceleration. As each additional light is activated, the previously activated light may either remain on or may be turned off, depending on the type of circuitry utilized.

US-A-4916431 discloses a vehicular early warning system including one or more of the following components: An accelerator pedal pressure sensor for providing an early warning braking signal; this element can also function as a backup brake light system, independent of the standard brake lights. A deceleration sensor reading either intake manifold vacuum or accelerator linkage position, said sensor being conected to activate an amber light providing a deceleration warning signal. A brake pedal pressure sensor system, distinguishing between different brake pressures. A low velocity speedometer sensor, which autmomatically triggers a warning light when a vehicle comes to a stop. The system can include a supplementary tail-light comprising a two colour lamp, which can be provided in the rear roof line of a vehicle; this lamp can be arranged to provide an amber light in the case of deceleration, and a red light when triggered by an accelerator pedal switch and/or by brake pressure sensors.

US-A-3109158 discloses a automatic signalling system for vehicles, including a rear three-colour supplementary tail-light indicating different operation modes of the car (idling; accelerating/car in motion; decelerating/car in motion; decelerating/foot on brake; accelerating in reverse).

GB-A-2245351 discloses systems providing additional brake/deceleration information, by means of bar type lighting displays which are illuminated in accordance with the break/deceleration forces applied.

DE-A-3430173 discloses a system comprising a green and a yellow lamp and a switching means associated with the accelerator pedal; when the accelerator pedal is stepped down by the driver, the green lamp is lit, indicating to the driver of a following vehicle that no braking is to be expected. When the driver removes his foot from the accelerator, the yellow light is lit, indicating to the driver of a following vehicle that braking of the preceding vehicle could be expected to occur.

DE-A-3440120 discloses a system for measuring deceleration and, when the deceleration measured is greater than a predetermined threshold, activating acoustical, optoacustical or optical signalling means, in order to warn drivers of other vehicles.

DE-A-2000892 discloses the use of additional yellow warning lamps which are lit when pressure is removed from the accelerator pedal.

DE-A-3620599 discloses a system where an additional brake lamp is positioned in the rear window iof the car, for example in the bottom center part of said window. The additional brake lamp is positioned such that this lamp and the conventional brake lamps constitute the corners of an imginary triangle.

## OBJECT OF THE INVENTION

The object of the invention is to provide a supplementary tail-light for automobiles, whose main purpose is to reduce the number of rear collisions and the reduction of the intensity of the damage, in those cases in which collisions unfortunately take place.

The object of the invention is achieved by the subject-matter of claim 1.

The present invention includes a supplementary tail-light that consists of a lamp with two different colours, one amber and the other red. The lamp is placed upon the bottom center part of the rear window (optimal optical perception) of the vehicle, and positioned such that the lamp, together with the conventional brake-lights, make up three corners of an imaginary triangle.

The lamp is interconnected with an electronic control unit, which picks up signals from sensors and acts in terms of the operating conditions of the vehicle, to connect or disconnect the amber light, providing correct operation.

Hence, the amber light indicates that the vehicle is slowing down and the red light (together with the conventional brake lights) indicates that the vehicle is braking. However, the priority of the red braking light is maintained over the amber light, in other words, when the brake is operated, the amber light does not operate.

From the point of view of prevention of traffic accidents, the present invention as claimed is a system capable of always warning the driver in the rear vehicle of certain maneuvers that affect the vehicle in front: slowing down and braking, by means of a better optical perception and rapid assimilation thereof. This proposed system is based on supplementary signalling of said maneuvers by means of a supplementary tail-light.

The design of the supplementary tail-light has been carried out for the purpose of optimizing:

1) Optical perception.

For this purpose, the two-coloured lamp is placed in the bottom center part of the rear window, forming an imaginary triangle with the brake lights of the vehicle.

2) Assimilation of what has happened.

The lamp includes an amber light indicating precaution, as the vehicle has slowed down.

The optimal combination of these two above cited aspects 1) and 2), having the purpose of reducing the time needed by a driver in motion to make a decision, will influence the driver's total reaction time much less than the present one.

## DESCRIPTION OF THE INVENTION

The supplementary tail-light for automobiles having a rear window and two conventional rear brake-lights that the present invention as specified in claim 1 proposes is based on a constructive and conceptional form of simple, practical and economic use, for the purpose of accident prevention.

* Functional development of the system:

The system is based on including a supplementary tail-light, comprising a two-colour (red/amber) lamp, located such that said lamp and the two conventional rear brake lights of the car make up the corners of an imaginary triangle, on the bottom center part of the rear window (optimal optical perception) of the vehicle.

* Operation:

- Amber light = indication of the vehicle slowing down.

- Red light in triangulation with the conventional brake lights = braking.

* Result:

- Amber light on: Indicating that the vehicle is slowing down

- Brake lights in triangulation: Braking.

* Purpose:

Prevention of rear collisions and reduction of the intensity of damage in the collisions that do take place.

In order to complete the description that is going to be made hereinafter and for the purpose of providing a better understanding of the features hereof, the present specification is accompanied by a drawing in whose figure the most significant details of the invention are represented in an illustrative and nonrestrictive manner.

## BRIEF DESCRIPTION OF THE DRAWINGS

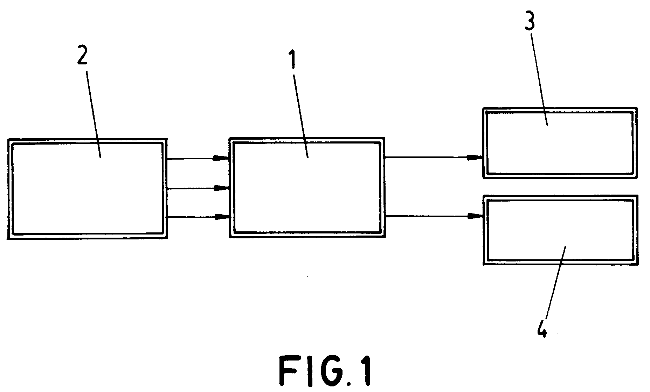

The single figure (sheet 1/1) shows a schematic view of a block operating diagram of an electronic control unit with sensors of a system for operating a two-colour lamp constituting a supplementary tail-light.

## DESCRIPTION OF A PREFERRED EMBODIMENT

In view of the figure commented on and in accordance with the numbering used, we can see how a two-colour lamp, comprised of an amber light (3) and another red light (4), is inter-connected with an electronic control unit for the correct operation thereof.

The electronic control unit (1) picks up signals from sensors (2) and operates in terms of operating conditions of the vehicle, in order to connect or disconnect the amber light.

The signal from the sensors (2) will be obtained in accordance with the characteristics of the different types of vehicles, to which they are coupled. For example it may be obtained from the impulse counter from which the signal of the odometer is obtained.

Operation:

The operation of the supplementary tail-light in different situations is the following one:

1) Vehicle at a standstill:

When the vehicle comes to a stop for any reason, the amber light should remain disconnected.

2) Vehicle in motion (constant speed and/or speeding up):

For manual or automatic gearshift vehicles (in other words, for all vehicles):

A) Vehicle approximately at a constant speed:

In this situation, the amber light remains disconnected.

B) Vehicle that is starting and that is speeding up:

As of the moment in which the vehicle speeds up the amber light remains disconnected.

Upon shifting to a higher gear, the driver (in vehicles with manual gearshift) takes his foot off the accelerator, steps down the clutch pedal and shifts gear. In this operation (which takes approximately more than 1 second) the electronic control unit will determine that the amber light remains disconnected.

3) Vehicle that is braking and slowing down:

* When the vehicle is slowing down, the sensors will send signals to the electronic control unit and will cause the amber light to be connected.

* Braking by means of using the brake system of the vehicle:

Upon a slowing down taking place, the amber light will remain connected and upon stepping down on the brake pedal the brake lights will be connected and at the same time the amber light is disconnected. The two-colour pilot light will have its red light on.

4) Vehicle going into reverse:

Upon putting the vehicle into reverse, the supplementary light system will remain turned off.

Result:

The supplementary tail-light combines the two optimal factors for preventing rear collisions which are:

* Improving the optical perception of brake light as it is located high up in the rear part of vehicles.

And a better assimilation of what has happened by the indicative precaution amber light pointing out any slowing down of the vehicle, in other words, a reduction of speed.

The purpose of including the tail-light in vehicles is to reduce the number of rear collisions and to reduce the intensity of damage on those collisions which unfortunately take place.

## Claims

1. A supplementary tail-light system for automobiles having a rear window and two conventional rear brake lights activated by a stepped-down brake pedal, for providing warning information to other drivers when a vehicle is slowing down, comprising:

    - a supplementary tail-light positioned at the bottom center part of the rear window of the car, said supplementary tail-light being positioned such that the two conventional break lights and said supplementary tail-light constitute the corners of an imaginary triangle;
    - sensors (2);
    - an electronic control unit (1), including means for receiving signals from the sensors (2), means for detecting deceleration and means for activating the supplementary tail-light when deceleration over a predetermined threshold is detected;

    wherein

    - the supplementary tail-light comprises a two-colour lamp for selectively emitting red light or amber light;

    - the tail-light system including means for

        - activating the amber light when deceleration over a certain threshold is detected;
        - activating the red light when the brake pedal is being stepped down; and
        - deactivating the amber light when the brake pedal is stepped down.

## Patentansprüche

1. Zusatzrücklichtsystem für Kraftfahrzeuge mit einer Heckscheibe und zwei herkömmlichen hinteren Bremslichtern, die durch ein getretenes Bremspedal aktiviert werden, um andere Fahrer zu warnen, wenn ein Fahrzeug abbremst, das umfaßt:

    - ein zusätzliches Rücklicht, das im unteren Mittelteil der Heckscheibe des Fahrzeugs angeordnet ist, wobei das zusätzliche Rücklicht so angeordnet ist, daß die beiden herkömmlichen Bremslichter und das zusätzliche Rücklicht die Ecken eines gedachten Dreiecks bilden;

    - Sensoren (2);

    - eine elektrische Steuerschaltung (1), die eine Einrichtung zum Empfang von Signalen von den Sensoren (2), eine Einrichtung zum Erfassen des Abbremsens und eine Einrichtung , die das zusätzliche Rücklicht aktiviert, enthält, wenn Abbremsen über einen vorgegebenen Schwellenwert erfaßt wird;

    wobei

    - das zusätzliche Rücklicht eine zweifarbige Leuchte umfaßt, die wahlweise rotes oder gelbes Licht ausstrahlt;

- wobei das Rücklichtsystem Einrichtungen enthält, die

- das gelbe Licht aktivieren, wenn Abbremsen über einem vorgegebenen Schwellenwert erfaßt wird;

- das rote Licht aktivieren, wenn das Bremspedal getreten wird; und

- das gelbe Licht abschalten, wenn das Bremspedal getreten wird.

**Revendications**

1. Système de feu arrière supplémentaire pour des automobiles comportant une vitre arrière et deux feux de stop classiques, allumés par appui du pied sur une pédale de frein, pour fournir des informations d'avertissement à d'autres conducteurs lorsqu'un véhicule ralentit, comprenant :

- un feu arrière supplémentaire placé en bas au centre de la vitre arrière de la voiture, ledit feu arrière supplémentaire étant placé de manière que les deux feux de stop classiques et ledit feu arrière supplémentaire marquent les sommets d'un triangle imaginaire ;
- des capteurs (2) ;
- une unité de commande électronique (1), comprenant des moyens pour recevoir des signaux des capteurs (2), des moyens pour détecter la décélération et des moyens pour allumer le feu arrière supplémentaire lorsqu'une décélération supérieure à un seuil prédéterminé est détectée;

dans lequel

- le feu arrière supplémentaire comporte une lampe bicolore destinée à émettre de manière sélective une lumière rouge ou une lumière orange ;
- le système de feu arrière comprenant des moyens pour

- allumer la lumière orange lorsqu'une décélération supérieure à un certain seuil est détectée ;
- allumer la lumière rouge lorsque l'on appuie sur la pédale de frein ; et
- éteindre la lumière orange lorsque l'on appuie sur la pédale de frein.

FIG.1